# EUROPEAN PATENT APPLICATION

(11) **EP 4 517 301 A1**
(43) Date of publication of application: **05.03.2025**
(21) Application number: 23195142.7
(22) Date of filing: 04.09.2023
(51) Int. Cl.: G01N 21/37, G01N 21/27, G01N 21/3504, G01N 21/17

(54) **INFRARED GAS ANALYZER AND METHOD FOR ANALYZING A GAS**

(71) Applicant: Siemens Aktiengesellschaft, 80333 München (DE)
(72) Inventor: Bichotte, Maxime, 67500 Haguenau (FR)
(74) Representative: Siemens Patent Attorneys

(57) **Abstract**

What is proposed is a gas analyzer module (1) for analyzing a measurement gas (7), comprising:
- an opto-pneumatic detection system (11) which is designed for detecting an infrared radiation (2) which is radiating through the measurement gas (7), wherein the opto-pneumatic detection system (2) comprises a pressure or flow sensitive sensor (14), and wherein the opto-pneumatic detection system (11) is designed for generating a measuring signal,
- a compensation system (6, 13a, 13b) which is designed for generating a compensation signal to compensate disturbing effects which comprises a further pressure or flow sensitive sensor,
- an analysis system (20) which is designed for creating a measuring result out of a difference between the measuring signal and the compensation signal, and
- a reflecting system (15, 16) which is designed for reflecting the infrared radiation (2), which has been radiated through the opto-pneumatic detection system (11), back to the opto-pneumatic detection system (11).

The module (1) is characterized in that the reflecting system (15, 16) comprises:
- a reflection plate (17) which comprises a rough surface which is designed for reflecting diffusely the infrared radiation (2) which radiates on the reflection plate (17) back to the opto-pneumatic detection system (11), and
- one or more distance elements (18a, 18b, 18c, 18d, 18e, 18f) which are designed for providing a specific distance (19) between the reflection plate (17) and the opto-pneumatic detection system (11) to determine the amount of the infrared radiation (2) which is reflected diffusely back to the opto-pneumatic detection system (11).

## Description

The present disclosure is directed to a gas analyzer module for analyzing a measurement gas according to claim 1. Furthermore, the present disclosure is directed to a method for analyzing a measurement gas according to claim 11.

DE 10 2012 212 978 B3 discloses an infrared gas analyzer module with a modulated infrared radiation which is radiated on opto-pneumatic detector system.

WO 2021/160379 A1 discloses an infrared gas analyzer with a modulated infrared radiation.

SIEMENS Ultramat 7, as disclosed in
https://mall.industry.siemens.com/mall/de/WW/Catalog/Products /10140311#Technische%20Daten,
is a gas analyzer module which uses a modulated infrared radiation to analyze a measurement gas. The physical principle is called NDIR in scientific literature (Non-Dispersive InfraRed spectroscopy). Ultramat 7 discloses a decoupler which reflects a part of the infrared radiation which is radiated through the measurement gas back to the measurement gas to reduce cross-interference effects of other gases. The decoupler comprises a conical mirror which reflects the infrared radiation in a directed way. The decoupler of Ultramat 7 is quite sensitive to mechanical tolerances which leads to a high risk of quality issues. There can also be problems with a stability in time due to moving parts used in the decoupler of Ultramat 7.

An objective of the present invention is to increase a rigidity, stability and measurement accuracy of a gas analyzing module.

The problem is solved by a gas analyzer module for analyzing a measurement gas, comprising:
- an opto-pneumatic detection system which is designed for detecting an infrared radiation which is radiating through the measurement gas, wherein the opto-pneumatic detection system comprises a pressure or flow sensitive sensor, and wherein the opto-pneumatic detection system is designed for generating a measuring signal,
- a compensation system which is designed for generating a compensation signal to compensate disturbing effects which comprises a further pressure or flow sensitive sensor,
- an analysis system which is designed for creating a measuring result out of a difference between the measuring signal and the compensation signal, and
- a reflecting system which is designed for reflecting the infrared radiation, which has been radiated through the opto-pneumatic detection system, back to the opto-pneumatic detection system.

The module is characterized in that the reflecting system comprises:
- a reflection plate which comprises a rough surface which is designed for reflecting diffusely the infrared radiation which radiates on the reflection plate back to the opto-pneumatic detection system, and
- one or more distance elements which are designed for providing a specific distance between the reflection plate and the opto-pneumatic detection system to determine the amount of the infrared radiation which is reflected diffusely back to the opto-pneumatic detection system.

In general, the infrared radiation is reflected to the opto-pneumatic detection system to compensate cross-gas interferences in the opto-pneumatic detection system. The one or more distance elements provide, in combination with the reflection plate, a tunable amount of infrared radiation which is reflected diffusely back to the opto-pneumatic detection system. When a distance between the reflection plate and the opto-pneumatic detection system increases, the quantity of infrared radiation which is back reflected to the opto-pneumatic detection system decreases, and vice versa.

The number of different parts used for the inventive gas analyzer module, respectively for the inventive decoupler is rather low. Also, the complexity of the used parts is rather low which decreases the risk of quality issues. More than this, there are no moving mechanical parts which leads to a high robustness of the inventive gas analyzer module.

The one or more distance elements can comprise an absorbing surface which is designed for absorbing a part of the infrared radiation which is reflected diffusely back to the opto-pneumatic detection system.

Alternatively, the one or more distance elements can be transparent for the infrared radiation for transmitting a part of the infrared radiation which is reflected diffusely back to the opto-pneumatic detection system out of the gas analyzer. Thereby, the one or more distance elements must be untransparent for radiation from outside (like sunlight).

With both possible improvements of the invention a part of the infrared radiation which is reflected diffusely by the reflection plate can be prevented from being radiated to the opto-pneumatic detection system. Thereby, the amount of infrared radiation which gets back into the opto-pneumatic detection system can be determined.

In the course of a further improvement of the invention, an amount of the distance elements is adjustable to define the amount of the infrared radiation which is reflected diffusely back to the opto-pneumatic detection system. Thereby, the distance elements can be attachable to each other, and to the reflection plate and to the opto-pneumatic detection system, especially via screwing means.

By combining a distinct amount of distance elements, the amount of the infrared radiation being back-reflected to the opto-pneumatic detection system can be set easily. Thereby, the gas analyzer module can be flexibly adopted to different measuring requirements (e.g. different measuring gases or different environmental conditions).

The distance elements can be made of aluminum, wherein at least the part of the distance elements which can be radiated by the diffusely reflected infrared radiation has been anodized to absorb the diffusely infrared radiation which radiates on it. Anodized aluminum is mechanical stable, and its shape is flexibly manufacturable.

Preferably, a thickness of the distance elements is within a range from 100 micrometers to 5 millimeters, preferably within a range from 300 micrometer to 1 millimeter. Thickness is the linear expansion of the distance elements in direction from the reflection plate to the opto-pneumatic detection system.

The surface of the reflecting plate which is radiated by the infrared radiation can be made of aluminum. Again, aluminum is mechanical stable, and its shape is flexibly manufacturable. A grain of aluminum can be within a range from 50 micrometers to 500 micrometers, preferably within a range from 150 micrometers to 350 micrometers. Thereby, the surface of the reflecting plate which is radiated by the infrared radiation can have been sandblasted.

The problem as described above is also solved by a method for analyzing a measurement gas under use of a gas analyzer module as described above.

Features of examples of the present disclosure will be-come apparent by reference to the following detailed description of the drawings. For the sake of brevity, reference numerals or features having a previously described function may or may not be described in connection with other drawings in which they appear.
- FIG 1: illustrates a general structure of a gas analyzer module;
- FIG 2: illustrates a general structure of a reflecting system of the gas analyzer module;
- FIG 3a-c: illustrate a specific construction example for the reflecting system; and
- FIG 4: shows a dependency of gas cross-interference as a function of a height of spacers of the reflecting system.

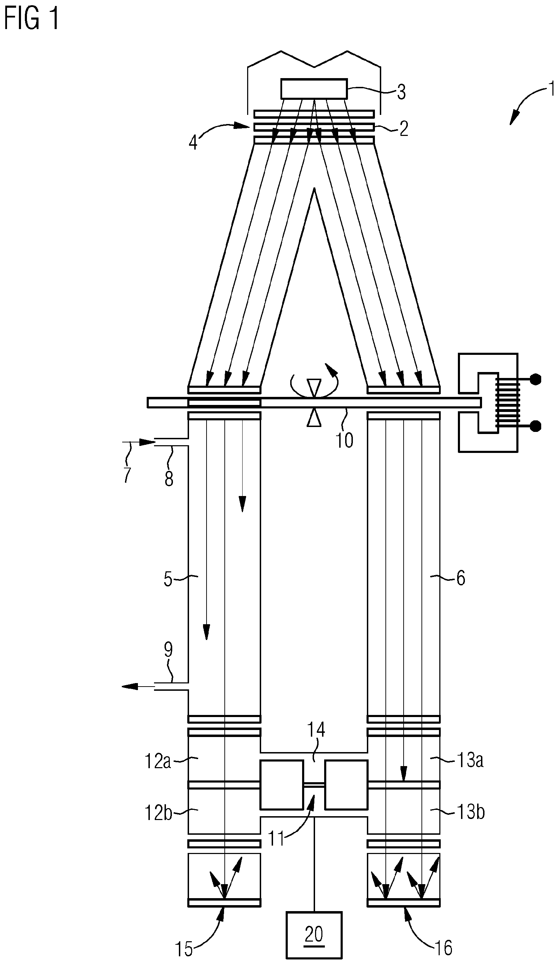

FIG 1 illustrates a gas analyzer module 1. In the gas analyzer module 1 an infrared radiation 2 generated by an infrared radiation source 3 is split by means of a beam splitter 4 into a measurement beam path through a measurement cell 5 and a comparison beam path through a reference cell 6.

A measurement gas 7 whose concentration is to be determined flows through an inlet 8, through the measurement cuvette 5 and through an outlet 9. The reference cell 6 is filled with a reference gas, e.g. nitrogen.

By means of a modulation device 10 arranged between the beam splitter 4 and the cuvettes 5, 6, here z. B. in the form of a rotating aperture wheel or impeller, the radiation 3 is alternatingly enabled and blocked by the measuring cell 5 and reference cell 6, so that both cells 5, 6 are alternatingly irradiated and shaded.

The infrared radiation 2 emerging alternatingly from the measuring cuvette 5 and the reference cuvette 6 is radiating into an opto-pneumatic detection system 11, which consists of two radiation-permeable chambers 12a, 12b, which are filled with the measuring gas 7 to be measured. The chambers 12a, 12b are connected to a pressure-sensitive or flow-sensitive sensor 14, e.g. a micro-flow sensor. A measurement signal formed based on the difference between the absorptions in the measurement cuvette 5 and reference cuvette 6 has a modulation frequency f. In addition, the measurement signal contains an interference signal component consisting of the sum of the absorptions in the cuvettes 5, 6 with twice the modulation frequency 2f.

The opto-pneumatic detection system 11 comprises two additional gas-filled chambers 13a, 13b which are filled with the same measurement gas as chambers 12a, 12b.

The measurement signal and the compensation signal are processed in an analysis system 20 to get a measurement result, here the concentration of the measurement gas of interest, with the help of the compensation signal, wherein the interference of the measurement result by the external influences is reduced.

To reduce or avoid gas cross-interferences the infrared radiation 2, which is radiating through the chambers 12a, 12b, 13a, 13b is back-reflected by reflection systems 15, 16, respectively. The structure of these reflection systems 15, 16 is explained in the following.

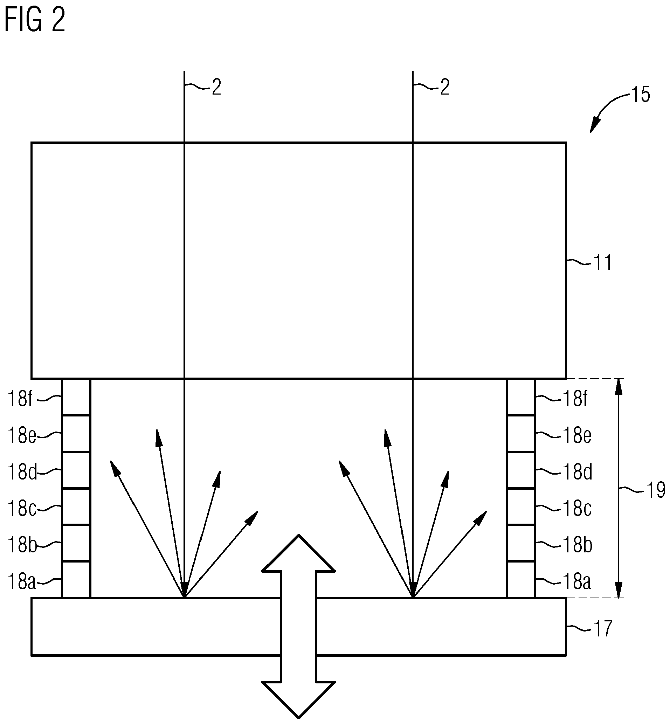

FIG 2 shows the reflection system 15 on the left side of the gas analyzer module 1 illustrated in FIG 1. The detection systems 16 comprises an analogue construction. The reflection system 15 comprises a reflection plate 17 and six distance elements 18a, 18b, 18c, 18d, 18e, 18f. The reflection plate 17 comprises a rough surface which is designed for reflecting diffusely the infrared radiation 2 which radiates on the reflection plate 17 back to the opto-pneumatic detection system 11.

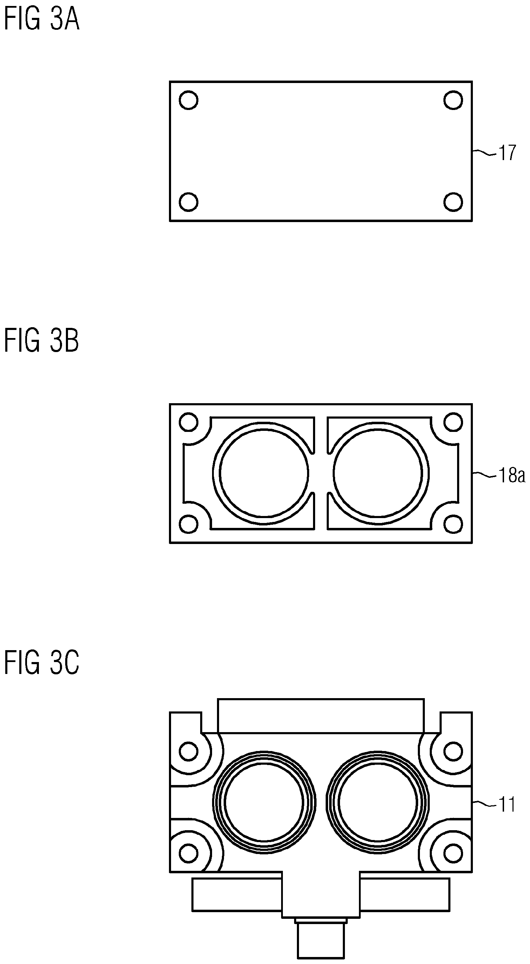

The surface of the reflecting plate 17 which is radiated by the infrared radiation 2 is made of aluminum. The grain of the aluminum is within a range from 50 micrometers to 500 micrometers and the surface of the reflecting plate 17 which is radiated by the infrared radiation 2 has been sandblasted. Thereby, the infrared radiation 2 which radiates on the surface of the reflecting plate 17 is diffusely reflected. A possible specific construction of the reflecting plate 17 is illustrated in FIG 3a.

The distance elements 18a, 18b, 18c, 18d, 18e, 18f also are made of aluminum. They comprise an absorbing surface which is designed for absorbing a part of the infrared radiation 2 which is reflected diffusely back to the opto-pneumatic detection system 11. A possible specific construction of distance elements 18a, 18b, 18c, 18d, 18e, 18f is illustrated in FIG 3b. In this case, the distance elements 18a, 18b, 18c, 18d, 18e, 18f are made of an absorbing material for infrared radiation (PLA plastic).

An amount of the distance elements 18a, 18b, 18c, 18d, 18e, 18f is adjustable to define the amount of the infrared radiation 2 which is reflected diffusely back to the opto-pneumatic detection system 11. To achieve this functionality, the distance elements 18a, 18b, 18c, 18d, 18e, 18f, the reflecting plate 3a and the opto-pneumatic detection system 11 are attachable to each other via screwing means.

The closer the reflecting plate 17 and the opto-pneumatic detection system 11 are, the higher is the amount of the infrared radiation 2 which is back-reflected to the opto-pneumatic detection system 11. Thereby, the part of the reflected infrared radiation 2 which is absorbed by the distance elements 18a, 18b, 18c, 18d, 18e, 18f is the smaller, the higher the total thickness 19 of the distance elements 18a, 18b, 18c, 18d, 18e, 18f is.

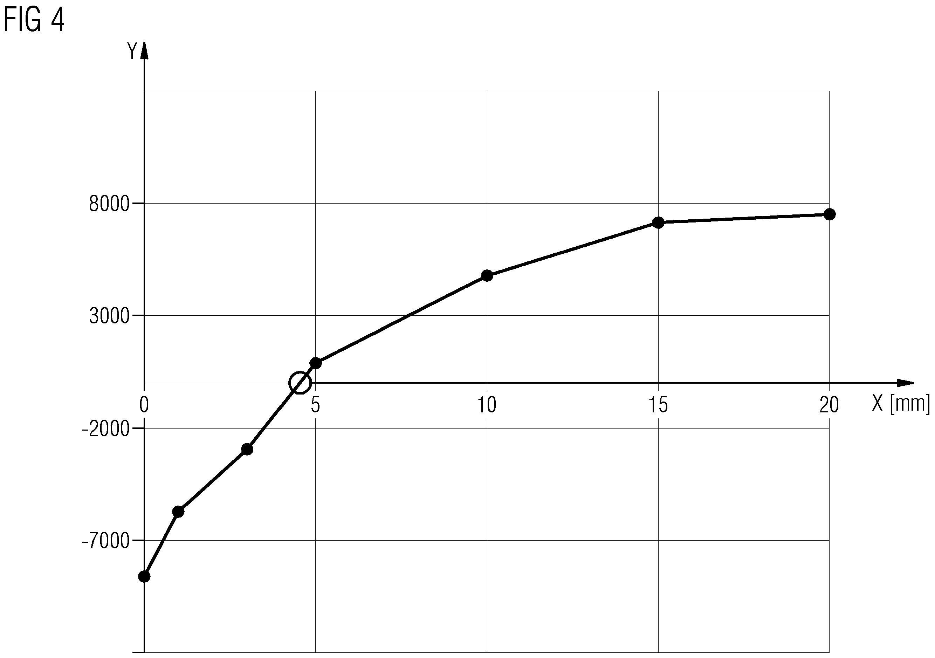

FIG 4 illustrates a dependency between a gas cross-interference and the total thickness 19 of the distance elements 18a, 18b, 18c, 18d, 18e, 18f. Thereby, the X-axis shows the total thickness 19 of the distance elements 18a, 18b, 18c, 18d, 18e, 18f in mm, whereby the Y-axis is a value of the gas cross-interference (within a range from -7.000 to 8.000 in arbitrary units).

FIG 4 shows that there is an optimal total thickness 19 of around 4.5 mm. This dependency is depending on the measuring gas which is analyzed. Tests have shown that it is sufficient if a thickness of the distance elements 18a, 18b, 18c, 18d, 18e, 18f is within a range from 300 micrometer to 1 millimeter.

The inventive gas analyzer module 1 with the newly proposed reflection system 15 allows a significant reduction of the gas cross-interference. Moreover, the proposed construction of the reflection system 15 is rigida and comprises only very low mechanical tolerances leading to optical instability. In general, the gas analyzer module 1 as described above is significant more efficient than the gas analyzer modules 1 as described in the state of the art.

While several examples have been described in detail, it is to be understood that the disclosed examples may be modified. Therefore, the foregoing description is to be considered non-limiting.

## Claims

1. Gas analyzer module (1) for analyzing a measurement gas (7), comprising:
- an opto-pneumatic detection system (11) which is designed for detecting an infrared radiation (2) which is radiating through the measurement gas (7), wherein the opto-pneumatic detection system (2) comprises a pressure or flow sensitive sensor (14), and wherein the opto-pneumatic detection system (11) is designed for generating a measuring signal,
- a compensation system (11, 12b, 13b) which is designed for generating a compensation signal to compensate disturbing effects which comprises a further pressure or flow sensitive sensor,
- an analysis system (20) which is designed for creating a measuring result out of a difference between the measuring signal and the compensation signal, and
- a reflecting system (15, 16) which is designed for reflecting the infrared radiation (2), which has been radiated through the opto-pneumatic detection system (11), back to the opto-pneumatic detection system (11),
**characterized in that**
the reflecting system (15, 16) comprises:
- a reflection plate (17) which comprises a rough surface which is designed for reflecting diffusely the infrared radiation (2) which radiates on the reflection plate (17) back to the opto-pneumatic detection system (11), and
- one or more distance elements (18a, 18b, 18c, 18d, 18e, 18f) which are designed for providing a specific distance (19) between the reflection plate (17) and the opto-pneumatic detection system (11) to determine the amount of the infrared radiation (2) which is reflected diffusely back to the opto-pneumatic detection system (11).

2. Gas analyzer module (1) according to claim 1, wherein the one or more distance elements (18a, 18b, 18c, 18d, 18e, 18f) comprise an absorbing surface which is designed for absorbing a part of the infrared radiation (2) which is reflected diffusely back to the opto-pneumatic detection system (11) .

3. Gas analyzer module (1) according to claim 1, wherein the one or more distance elements (18a, 18b, 18c, 18d, 18e, 18f) are transparent for the infrared radiation (2) which is reflected diffusely back to the opto-pneumatic detection system (11).

4. Gas analyzer module (1) according to one of the preceding claims, wherein an amount of the distance elements (18a, 18b, 18c, 18d, 18e, 18f) is adjustable to define the amount of the infrared radiation (2) which is reflected diffusely back to the opto-pneumatic detection system (11).

5. Gas analyzer module (1) according to claim 4, wherein the distance elements (18a, 18b, 18c, 18d, 18e, 18f) are attachable to each other, and to the reflection plate (17) and to the opto-pneumatic detection system (11), especially via screwing means.

6. Gas analyzer module (1) according to one of the preceding claims, wherein the distance elements (18a, 18b, 18c, 18d, 18e, 18f) are made of aluminum, wherein at least the part of the distance elements (18a, 18b, 18c, 18d, 18e, 18f) which can be radiated by the diffusely reflected infrared radiation (2) has been anodized to absorb the diffusely infrared radiation (2) which radiates on it.

7. Gas analyzer module (1) according to one of the preceding claims, wherein a thickness of the distance elements (18a, 18b, 18c, 18d, 18e, 18f) is within a range from 100 micrometers to 5 millimeters, preferably within a range from 300 micrometer to 1 millimeter.

8. Gas analyzer module (1) according to one of the preceding claims, wherein the surface of the reflecting plate (17) which is radiated by the infrared radiation (2) is made of aluminum.

9. Gas analyzer module (1) according to claim 8, wherein a grain of the aluminum is within a range from 50 micrometers to 500 micrometers, preferably within a range from 150 micrometers to 350 micrometers.

10. Gas analyzer module (1) according to claim 8 or 9, wherein the surface of the reflecting plate (17) which is radiated by the infrared radiation (2) has been sandblasted.

11. Method for analyzing a measurement gas under use of a gas analyzer module (1) according to one of the preceding claims.
